# EUROPÄISCHE PATENTSCHRIFT

(11) **EP 4 356 071 B1**
(45) Veröffentlichungstag und Bekanntmachung des Hinweises auf die Patenterteilung: **30.10.2024**
(21) Anmeldenummer: 22773226.0
(22) Anmeldetag: 05.09.2022
(51) Int. Cl.: G01C 21/16, G01C 25/00, G06T 7/20, G01S 5/00, G01S 5/16, G01S 5/18, G01S 5/30, G01S 11/16

(54) **VORRICHTUNG ZUR ÜBERWACHUNG DER POSITION UND/ODER LAGE UND/ODER BEWEGUNG EINES WERKZEUGES**
DEVICE FOR MONITORING THE POSITION AND/OR LOCATION AND/OR MOVEMENT OF A TOOL
DISPOSITIF DE SURVEILLANCE DE POSITION ET/OU D'EMPLACEMENT ET/OU DE MOUVEMENT D'UN OUTIL

(30) Priorität: 03.09.2021 DE 102021122889; 06.12.2021 DE 102021132075
(43) Veröffentlichungstag der Anmeldung: 24.04.2024
(73) Patentinhaber: Sarissa GmbH, 88250 Weingarten (DE)
(72) Erfinder: JAUCH, Volker, 88255 Baienfurt (DE)
(74) Vertreter: Otten, Roth, Dobler & Partner mbB Patentanwälte
(86) Internationale Anmeldenummer: PCT/EP2022/074642
(87) Internationale Veröffentlichungsnummer: WO 2023/031464

(56) Entgegenhaltungen:
- DE-A1- 102013 018 703
- US-A1- 2016 214 198
- US-B1- 9 842 254

## Beschreibung

In der Druckschrift WO 2011/128766 A2 wird eine Bilderfassungseinheit als Ortungsvorrichtung beschrieben mit der auch ein Gyroskop kalibriert werden kann. Weitere Formen von Ortungsvorrichtungen, z.B. zur Ultraschall-Ortung werden als Alternative zur Bilderfassung erwähnt. Aus der DE 10 2013 018 703 A1 ist eine Vorrichtung zur Verbesserung von Fertigungsprozessen bekannt. Die US 9,842,254 B1 beschreibt ein System oder ein Prozess mittels welchem eine inertiale Messeinheit kalibierbar ist. Die US 2016/0214198 A1 zeigt ein Schweißsystem, welches ein Messsystem mit einer interialen Messeinheit aufweist.

Inertialsensoren wie ein Gyroskopsensor und/oder ein Trägheitssensor erfassen dynamische Parameter eines bewegten Gegenstandes, wie eine Impulsänderung, d.h. eine Beschleunigung, die Änderung des Drehimpulses oder dergleichen und erlauben dadurch die Bestimmung der geänderten Position und/oder Lage und/oder Bewegung des Gegenstandes. Da die Position und/oder Lage und/oder Bewegung nicht über eine absolute Erfassung eines externen Sensors, sondern durch eine auf der Basis der zuletzt bestimmten Daten fortgesetzt wird, summieren sich Fehler in der Bestimmung der Position und/oder Lage und/oder Bewegung mit der Zeit auf. Um die gewünschte Genauigkeit zu erhalten, muss eine solche Vorrichtung daher regelmäßig neu kalibriert werden. Dies geschieht in der Regel damit, dass der entsprechende Gegenstand in einen vorgegebenen, normierten Zustand mit bekannter Position und/oder Lage und/oder Bewegung des Gegenstandes gebracht wird. Beim Einsatz von Werkzeugen während der Montage eines Werkstücks wird durch die Kalibrierung der Montagevorgang unterbrochen und sorgt für einen Zeitverlust sowie eine Störung der Konzentration der arbeitenden Person.

Aufgabe der Erfindung ist es daher, eine solche Vorrichtung nach dem Oberbegriff des Anspruchs 1 mit verbesserter Kalibrierung vorzuschlagen.

Diese Aufgabe wird durch die Kennzeichnenden Merkmale des Anspruchs 1 gelöst.

Entsprechend wird eine Vorrichtung mit einem Werkzeug zur Überwachung der Position und/oder Lage und/oder Bewegung des Werkzeuges vorgeschlagen, wobei am Werkzeug ein Inertialsensor wie ein Gyroskopsensor und/oder ein Trägheitssensor befestigt ist, wobei an der Vorrichtung eine Kontrolleinheit, wenigstens eine Bilderfassungseinheit und eine Bildauswerteeinheit vorgesehen ist, wobei die Kontrolleinheit zur Bestimmung einer Position und/oder Lage und/oder Bewegung des Werkzeuges ausgehend von einer vorgegebenen Ausgangssituation anhand der erfassten Sensordaten des Inertialsensors ausgebildet ist, wobei die Bilderfassungseinheit zur Kalibrierung des Inertialsensors vorgesehen ist, wobei die Bilderfassungseinheit dazu ausgebildet ist, wenigstens in bestimmten Zeitpunkten oder Zeitintervallen eine oder mehrere Bildaufnahmen des Werkzeuges zu erfassen, wobei die Bildauswertungseinheit zur Bestimmung der Position und/oder Lage und/oder Bewegung des Werkzeuges vorgesehen ist und wobei die Kontrolleinheit für die Kalibrierung der Sensordaten des Inertialsensors zur Verarbeitung der Daten der Bilderfassungseinheit ausgebildet ist, dadurch gekennzeichnet, dass an der Vorrichtung eine Ortungsvorrichtung vorgesehen ist, wobei die Ortungsvorrichtung mit einem Ultraschallsender und einem Ultraschallempfänger ausgebildet ist, wobei die Ortungsvorrichtung zur Ortung des Werkzeugs durch Bestimmung der Entfernung zwischen dem Ultraschallsender und dem Ultraschallempfänger über Laufzeitmessungen von Ultraschallsignalen ausgebildet ist, wobei mittels der Ultraschallsignale der Abstand zwischen entsprechenden Sendern und Empfängern bestimmbar ist, wobei der Arbeitsbereich der mittels Laufzeitmessung arbeitenden Ortungsvorrichtung über einen Bildbereich der Bilderfassungseinheit hinausreicht und die Feststellung der Anwesenheit des Werkzeugs im Bildbereich der Bilderfassungseinheit durch die Ortungsvorrichtung zur Ortung des Werkzeugs über Laufzeitmessungen der Ultraschallsignale vorgesehen ist. So kann ein regelmäßiger Abgleich der Daten des Inertialsensors mit denen der Bildverarbeitung und damit auch die Kalibrierung des Inertialsensors stattfinden, wenn sich das Werkzeug im Bildbereich der Bilderfassungseinheit befindet. Somit ist der Inertialsensor stets in einem ausreichend kalibrierten Zustand, um auch außerhalb des Bilderfassungsbereichs die gewünschten Daten zur Position und/oder Lage und/oder Bewegung des Werkzeuges zu liefern.

Die Bilderfassungseinheit wird dabei bevorzugt so aufgestellt, dass beim vorgesehenen Arbeitsablauf das Werkzeug regelmäßig in den Bildbereich geführt wird, wodurch eine Kalibrierung ohne Unterbrechung während der Arbeit möglich ist.

Die Erfindung bietet aber bereits dann Vorteile, wenn im Arbeitsablauf das Einbringen des Werkzeugs in den Bildbereich als eigener Ablaufschritt vorgesehen ist, da auch dann der Kalibriervorgang gegenüber der Positionierung in einer definierten Kalibrierposition und/oder Lage, z.B. in einer Schablone oder dgl. deutlich verkürzt wird.

Die unabhängige Ortungsvorrichtung erlaubt die Werkzeugortung in einem gegenüber dem Blickfeld der Bilderfassungseinheit deutlich größeren Arbeitsraum. Diese Ortungsdaten können dann in Kombination mit Daten des Inertialsensors zur genauen Bestimmung Position und/oder Lage und/oder Bewegung des Werkzeuges verwendet werden.

Zugleich kann die Ortung über diese unabhängige Ortungsvorrichtung auch zur Verbesserung oder Erleichterung der Bildauswertung der Bilderfassungseinheit verwendet werden. Ist z. B. die Lage eines Werkzeuges oder eines am Werkzeug angebrachten Sensors, wie ein Ultraschallsender, bekannt, so kann aus der Bildperspektive die Orientierung des Werkzeugs im Raum leichter ermittelt werden.

Mit Ultraschallsendern und Empfängern kann eine Ortung über Laufzeitmessungen sehr genau erfolgen. Auch über elektromagnetische Signale entsprechender Sender und Empfänger kann insbesondere über eine Laufzeitmessung eine Ortung erfolgen.

Eine erfindungsgemäße Vorrichtung ist beispielsweise in Assistenz- oder Überwachungsvorrichtungen zur Qualitätssicherung bei der Montage von Werkstücken mittels eines oder mehrerer Werkzeuge, insbesondere eines Handwerkzeugs wie ein Schrauber, eine Bohrmaschine oder dergleichen, verwendbar. Sie kann auch mit einer visuellen oder hörbaren Anleitung für die verschiedenen Montageschritten und/oder mit automatischen Werkzeugeinstellungen, z. B. einer Drehmomenteinstellung eines Schraubers oder dergleichen verbunden werden.

Die Erfindung ist besonders von Vorteil, wenn das zu bearbeitend Werkstück sehr groß ist, wie dies beispielsweise bei der Montage von Flugzeugen, Schiffen, Zügen oder dergleichen der Fall ist. Bei solchen Arbeiten gibt es oft Bereiche, die mit Ortungsvorrichtungen wie Ultraschallvorrichtungen nicht oder nicht vollständig abgedeckt werden, so dass der Einsatz eines oder mehrerer Inertialsensoren den Arbeitsbereich der Überwachung des Werkzeugs deutlich erweitert und im Falle der Kombination mit einer weiteren Ortungsvorrichtung ergänzt.

Gerade bei großen Arbeitsbereichen für das Werkzeug ist jedoch eine Kalibrierung durch Ablage in einer vorgegebenen Kalibrierposition aufgrund entsprechender Wege sehr zeitaufwändig. Die vollständige oder weitgehende Automatisierung der Kalibrierung wie es durch die Erfindung ermöglicht wird, bietet einen großen Vorteil.

Von Vorteil ist es, wenn wenigstens eine Datenübertragungseinheit zum drahtlosen oder drahtgebundenen Übertragen von Daten/Informationen des Inertialsensors und/oder wenigstens eines Ortungssenders der unabhängigen Ortungseinheit umfasst.

Mit Hilfe dieser Maßnahmen gemäß der Erfindung können in vorteilhafter Weise diverse Nachteile des Stands der Technik beseitigt bzw. verringert werden.

So kann beispielsweise nur ein einziger Ortungssender, insb. Ultraschall-Sender oder eine LED-/Licht-Quelle, vorgesehen werden, der/die in vorteilhafter Weise mittels dem Inertialsensor für die Ortung kombiniert wird. Die Datenübertragungseinheit wird in vorteilhafter Weise zur Datenübertragung von Daten des Inertialsensors und/oder anderer Daten/Informationen/Parameter verwendet.

Es hat sich gezeigt, dass hiermit ein großer Vorteil der Kombination aus einem einzigen Ortungssender, beispielsweise in Form eines Ultraschallsenders, und einem Inertialsensor, vorzugsweise einer Inertialsensoreinheit, zusammen mit einer drahtlosen Datenübertragung in einer sehr kompakten bzw. Platz sparenden Bauform besteht. So kann die Sensoreinheit am/im Werkzeuggerät kleiner als bislang realisiert werden. Dementsprechend vorteilhaft können die Ortungskomponenten bzw. die Sensoreinheit im/am Werkzeuggerät integriert und zudem auch gegen Beschädigungen, etc. geschützt werden.

Darüber hinaus ermöglicht die Ausführung mit einer Ultraschallquelle eine höhere Genauigkeit der Ortung, insb. der Koordinatenbestimmung bzw. sog. "Geodaten", als wenn wie bislang handelsüblich drei Ultraschallsender verwendet bzw. "verrechnet" werden.

Die vorteilhafte Datenübertragungseinheit ist darüber hinaus in vorteilhafter Weise ausgebildet bzw. geeignet, Daten zu senden, mit welchen z.B. eine vorbeugende Wartung etc. unterstützt werden kann.

Die Datenübertragungseinheit zur drahtlosen Übertragung kann an die Umgebung angepasst werden und hierzu beispielsweise mittels elektro-magnetischer Wellen/Signale im Funk- und/oder Infrarot- und/oder sichtbaren Frequenzbereich arbeiten.

Die Datenübertragungseinheit kann jedoch auch zur Datenübertragung mittels Ultraschall, insbesondere durch Modulation eines Ortungssignals ausgebildet sein und so einen ohnehin vorhandenen Sender nutzen.

Wird die Datenübertragungseinheit zur elektromagnetischen Übertragung ausgebildet, so kann sie auch zur Übertragung eines Triggersignals für den Start der Laufzeitmessung verwendet werden. Hierzu ist ansonsten eine von der Datenübertragungseinheit separate Triggereinheit zur elektromagnetischen Übertragung, insbesondere im infraroten Frequenzbereich, eines Triggersignals für den Start der Laufzeitmessung vorzusehen. Durch die signifikant kürzere Laufzeit eines mit Lichtgeschwindigkeit laufenden Triggersignals kann der Start des deutlich langsameren Ultraschallsignals zur Laufzeitmessung ohne wesentlichen Fehler in der Laufzeitmessung initiiert werden.

Durch eine drahtlose Übermittlung des Triggersignals können auch bei räumlich beabstandeten Sendern etwaige Störquellen, die räumlich begrenzt sind, vermieden werden.

In einer besonderen Weiterbildung der Erfindung ist der Inertialsensor als Inertialsensor-Einheit mit wenigstens einem Beschleunigungssensor zur Erfassung einer linearen und/oder rotatorischen Beschleunigung und/oder mit wenigstens einem Drehratensensor zur Erfassung einer Rotationsgeschwindigkeit bzw. Rotation ausgebildet. Die Inertialsensor-Einheit bzw. eine inertiale Messeinheit (sog. IMU) umfasst in vorteilhafter Weise eine räumliche Kombination mehrerer Inertialsensoren wie Beschleunigungssensoren und/oder Drehratensensoren. Zur Erfassung der sechs möglichen kinematischen Freiheitsgrade umfasst die Inertialsensor-Einheit bzw. IMU in vorteilhafter Weise drei jeweils aufeinander orthogonal stehende Beschleunigungssensoren (Translationssensoren) für die Erfassung der translatorischen Bewegung in x- bzw. y- bzw. z-Achse und/oder in vorteilhafter Weise drei orthogonal zueinander angebrachten Drehratensensoren bzw. sog. "Gyroskopische Sensoren" für die Erfassung rotierender (kreisender) Bewegungen in x- bzw. y- bzw. z-Achse.

Die Inertialsensor-Einheit bzw. IMU liefert/generiert in vorteilhafter Weise z.B. als Signale bzw. Messwerte/Parameter vorzugsweise drei lineare Beschleunigungswerte für die translatorische Bewegung und/oder drei Winkelgeschwindigkeiten für die Drehraten. So können beispielsweise in einer bestimmten Anwendung der Sensoreinheit in vorteilhafter Weise aus den Messwerten der IMU für die linearen Beschleunigungen, ggf. nach Kompensation der Erdbeschleunigung, durch Integration eine lineare Geschwindigkeit und ggf. nochmaliger Integration die Position im Raum bezogen zu einem Referenzpunkt bzw. Koordinatensystempunkt/-ursprung oder dergleichen ermittelt werden. Die vorteilhafte Integration der drei Winkelgeschwindigkeiten liefert, bezogen zu einem Referenzpunkt, die Orientierung der Sensoreinheit und/oder des Werkzeuggerätes im Raum, die in vorteilhafter Weise für die Ortung bzw. die Fertigungsassistenzvorrichtung gemäß der Erfindung verwendbar ist.

Vorzugsweise ist der Inertialsensor als mikro-elektromechanische Inertialsensor-Einheit mit wenigstens einem mikro-elektro-mechanischen Beschleunigungssensor zur Erfassung der linearen und/oder rotatorischen Beschleunigung und/oder mit wenigstens einem mikro-elektro-mechanischen Drehratensensor zur Erfassung der Rotationsgeschwindigkeit/Rotation ausgebildet. Hiermit kann eine besonders Platz sparende Bauweise realisiert werden, was die Integrationsfähigkeit und die Resilienz gegen Beschädigungen etc. verbessert.

Zum vorteilhaften Bestimmen der Integrationskonstanten, zur Verbesserung der Genauigkeit und/oder um eine Nullpunkt- und Langzeitdrift der oben genannten Inertialsensoren bzw. des Lagemesssystems in vorteilhafter Weise zu korrigieren bzw. anzupassen und/oder zu eichen/kalibrieren, können in vorteilhafter Weise z.B. zusätzliche Sensoren und/oder Maßnahmen verwendet werden, z.B. Magnetometer bzw. Magnetfeldsensoren und sog. GNSS-Sensoren in der Inertialsensor-Einheit integriert.

Grundsätzlich ist gemäß der Erfindung von Vorteil, dass die Ortung mittels einer Laufzeitmessung zwischen dem Ortungssensor und der Empfangseinheit vorgenommen wird. Generell lässt sich nämlich über die Laufzeit des Ortungssignals eine exakte Entfernung zwischen einem Sender und einem Empfänger bestimmen. Bei Verwendung mehrerer Laufstrecken lässt sich somit die Ortung präzisieren. Bei insgesamt drei linear unabhängigen Laufstrecken verbleiben maximal zwei Punkte als zu ortende Positionen, von denen in der Regel eine durch eine Plausibilitätsbetrachtung auszuschließen ist. So kann beispielsweise ein zweiter theoretisch möglicher Punkt systematisch immer außerhalb des Wirkungsbereichs der Ortungsvorrichtung liegen. Diese Überlegungen basieren auf der Tatsache, dass bei drei gemessenen Entfernungen zu einem Ortungssensor die gemeinsamen Schnittpunkte von drei Kugeloberflächen im Raum zu ermitteln sind.

Durch diese Möglichkeit der Ortung mit dem oder den ohnehin vorhandenen Ortungssensoren kann auch die korrekte Anwesenheit des Werkzeuggerätes im Blickfeld der Bilderfassungseinheit zur Eichung und/oder Kalibrierung festgestellt werden. Sodann kann durch die Bilderfassung eine Eich-und/oder Kalibrierposition bestimmt werden.

Die Sensoreinheit kann in unterschiedlichen Ausführungen realisiert werden. Eine vorteilhafte Ausführung besitzt nur einen Ultraschallsender und eine sog. IMU-Einheit.

Bei geschickter Wahl der Inertialsensoreinheit werden z.B. die folgenden Leistungsmerkmale in vorteilhafter Weise abgedeckt: Beschleunigungsmesser, Schwerkraft, Lineare Beschleunigung, Gyroskop, Gyroskop unkalibriert, Spiel-Rotationsvektor, Schrittzähler, Schrittdetektor, Signifikante Bewegung, Neigungsdetektor, Geste zum Aufheben, Geste zum Aufwachen, Geste zum Schauen, Aktivitätserkennung, etc..

Auch können mit einem integrierten bzw. zusätzlichen Magnetometer weitere Funktionalitäten umgesetzt werden, z.B.: Geomagnetisches Feld, Magnetisches Feld unkalibriert, Orientierung, Rotationsvektor, geomagnetischer Rotationsvektor, etc.

Bei einer vorteilhaften Verknüpfung der Inertialsensoreinheit mit dem Ultraschall liefert der Ultraschallsender die Ortsinformation, indem z.B. die ausgesendeten Schallwellen von mehreren Empfangseinheiten empfangen werden und danach der Ort des Senders ermittelt werden kann. Diese Ortsinformation ist nur ein Punkt im Raum (x,y,z). Die Information der Lage (Pose) und der Orientierung des Objektes im Raum, auf welchem die Sensoreinheit montiert ist, wird in vorteilhafter Weise aus dem Inertialsensor gewonnen.

Die ermittelten Daten werden vorzugsweise über eine Funkstrecke, z.B. mittels 5G oder BLE oder 4G oder WLAN oder ein proprietäres Protokoll in zugelassenen Frequenzbändern oder andere, zur Empfangseinheit übertragen und mit den Ortsinformationen des Ultraschalls kombiniert. Der Ultraschallsender kann ggf. auch gegen eine Lichtquelle oder mehrere Lichtquellen, LEDs ausgetauscht werden.

Die in gewissen zeitlichen Abständen vorzunehmende Kalibrierung der Inertialsensoreinheit geschieht z.B. über einen Softwarebefehl vom Empfänger zum Sender, über eine bidirektionale Funkstrecke, wenn dieser sich z.B. an einem definierten Ort befindet. Dass sich der Inertialsensor am Kalibrierort befindet, kann durch die Bilderfassungseinheit und/oder der unabhängigen Ortungsvorrichtung verifiziert werden.

Ein großer Vorteil der Kombination aus einem Ultraschallsender und einer Inertialsensoreinheit zusammen mit einer Funkstrecke besteht in der sehr kompakten Bauform. Darüber hinaus wird die Ausführung mit einer einzigen Ultraschallquelle eine höhere Genauigkeit der Ortung ermöglichen, als wenn drei Ultraschallsender verrechnet werden.

Die integrierte elektromagnetische Übertragungseinheit ist darüber hinaus geeignet, in vorteilhafter Weise Daten zu senden, mit welchen vorbeugende Wartung unterstützt werden kann.

Ein Ausführungsbeispiel der Erfindung ist in der Zeichnung dargestellt und wird anhand der Figuren nachfolgend näher erläutert.

Im Einzelnen zeigen
Figur 1 eine schematische Darstellung eines Montagebands mit erfindungsgemäßer Vorrichtung,
Figur 2 ein Blockdiagramm einer erfindungsgemäßen Vorrichtung und
Figur 3 eine schematische Darstellung einer Ortungsvorrichtung mit Ortungsgegenstand.

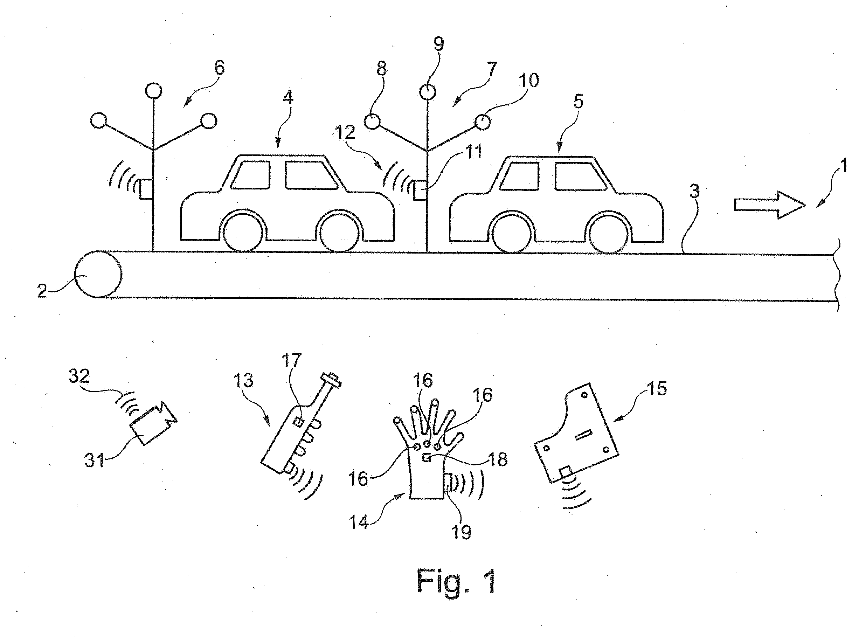

In Figur 1 ist ein Montageband 1 schematisch dargestellt, das ein um eine Umlenkrolle 2 umlaufendes Obertrum 3 aufweist. Auf dem Montageband 1 sind halbfertige Automobile 4, 5 als erfindungsgemäß zu bearbeitende Werkstücke dargestellt.

Jedem der Automobile 4, 5 bzw. Werkstücke ist eine Ortungsvorrichtung 6, 7 zugeordnet, die jeweils ortsfest zum entsprechenden Werkstück 4,5 auf dem Montageband 1 mitbewegt wird. Die Werkstücke können alternativ auch auf selbstfahrenden Montageinseln angeordnet sein.

Jede Ortungsvorrichtung 6, 7 umfasst drei Ortungssensoren 8, 9, 10 sowie eine Kommunikationseinheit 11 zur drahtlosen Kommunikation mittels elektromagnetischer Wellen 12, beispielsweise als Datenübertragungseinheit wie oben angeführt.

Drei schematisch dargestellte verschiedene Ortungsgegenstände in Form eines Schraubers 13, eines Handschuhs 14 sowie eines Montageteils 15 sind jeweils ebenfalls mit Ortungssensoren 16, Inertialsensoren 17, 18 sowie einer Kommunikationseinheit 19 versehen.

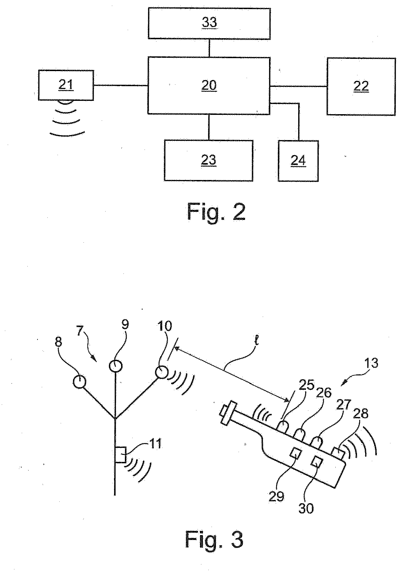

In Figur 2 ist eine zentrale Kontrolleinheit 20 dargestellt, die mittels einer Kommunikationseinheit 21 eine Datenverbindung zu Ortungsvorrichtungen und Ortungsgegenständen beinhaltet.

Er ist weiterhin mit einer Steuereinheit 22, einer Anzeige 23 sowie einem Signalgeber 24 verbunden.

In Figur 3 ist die Ortungsvorrichtung 7 sowie der Schrauber 13 als Ortungsgegenstand dargestellt. Der Schrauber 13 beinhaltet die Ortungssensoren 25, 26, 27, eine Kommunikationseinheit 28 sowie zwei Inertialsensoren 29,30. Einer der Inertialsenoren 29 kann beispielsweise ein Trägheitssensor zur Messung von Impulsänderungen und der andere Inertialsensor 30 ein Gyroskop sein.

Zur Kalibrierung der Inertialsensoren 29,30 ist eine Bilderfassungseinheit vorgesehen, die über einen drahtlosen Datenkanal 32 mit einer Bildauswerteeinheit 33 in Verbindung steht, die wiederum mit der zentralen Kontrolleinheit 20 kommuniziert.

Beispielhaft für die Methode der Ortung ist eine Laufstrecke l dargestellt, über die die Laufzeit eines Ortungssignals erfassbar ist. So kann beispielsweise der Ortungssensor 10 als Ultraschallsender und der Ortungssensor 25 als Ultraschallempfänger ausgebildet sein. Eine Möglichkeit der Laufzeitmessung besteht beispielsweise darin, dass die zentrale Kontrolleinheit 20 mittels der Kommunikationseinheit 21 ein Triggersignal an die Ortungsvorrichtung 7 sowie an den Ortungsgegenstand 13 sendet. Infolgedessen gibt der Ortungssensor 10 ein Ultraschallsignal aus, das nach Durchlaufen der Laufstrecke l vom Ortungssensor 25 detektiert wird. In einer Ausführungsform der Erfindung wird der Empfang des Ultraschallsignals über die Kommunikationseinheit 28 bestätigt, sodass die zentrale Kontrolleinheit 20 die Laufzeit ermittelt. In einer anderen Ausführungsform kann mit dem Triggersignal im Ortungssensor 25 eine Uhr gestartet werden, sodass mit Empfang des Ortungssignals unmittelbar die Laufzeit gemessen ist und diese als Information über die Kommunikationseinheit 28 übermittelt wird.

Grundsätzlich kann eine Ortung bzw. eine Laufzeitmessung auch in eine andere Richtung erfolgen, das heißt, der Ortungssensor 25 kann als Sender und der Ortungssensor 10 als Empfänger ausgebildet sein.

In den dargestellten Ausführungsvarianten sind jeweils drei Ortungssensoren an den Ortungsgegenständen angebracht. Hierdurch lässt sich neben der Position des jeweiligen Ortungsgegenstandes 13, 14, 15 auch dessen Orientierung im Raum ermitteln, was gegebenenfalls bei der beabsichtigten Prozessüberwachung von Vorteil ist. Die Ortung und die Bestimmung der Orientierung eines Ortungsgegenstandes 13, 14, 15 wäre auch mit nur einem Ortungssensor in Verbindung mit einem Inertialsensor möglich.

Wie anhand von Figur 1 erkennbar ist, wird an jedem Werkstück 4, 5 ein bezüglich dem Werkstück 4, 5 ortsfest angebrachte Ortungsvorrichtung 6, 7 vorgesehen. Über die Ortung eines Ortungsgegenstandes 13, 14, 15 sowie gegebenenfalls dessen Orientierung ist damit unmittelbar die relative Position des Ortungsgegenstandes in Bezug zum Werkstück 4, 5 sowie die Orientierung hierzu bekannt. Somit können die Bewegungen der Ortungsgegenstände 13, 14, 15 in Bezug auf die Werkstücke 4, 5 durch die zentrale Kontolleinheit 20 überwacht werden.

Je nach zu überwachenden Arbeitsschritt kann der Prozessbegleitrechner eine Information über die Art oder Typ des entsprechenden Ortungsgegenstandes erhalten. Sofern erforderlich, kann jedoch auch eine individuelle Identifizierung über die separate Datenverbindung erfolgen. Zusätzlich können auch weitere Informationen, wie beispielsweise Drehzahl, Drehmoment oder dergleichen während eines Montagevorgangs übermittelt werden. Auch die Einstellung eines Werkzeugs, das als Ortungsgegenstand erfasst wird, kann über diese Datenverbindung durch die zentrale Kontrolleinheit 20 vorgenommen werden.

Über Ortungsgegenstände, die von einer Montageperson angelegt werden können, beispielsweise den Handschuh 14 können Bewegungen von Montagepersonen verfolgt werden. Hierdurch ist eine Überwachung der Montagebewegungen oder auch eine Führung der Montagepersonen durch die vorzunehmenden Prozessschritte möglich.

Auch Montageteile, das heißt Teile, die an die Werkstücke 4, 5 zu montieren sind, können entsprechend überwacht werden, wie dies anhand einer Fahrzeugtür 15 schematisch dargestellt ist.

In einer besonderen Ausführungsform werden die Ortungssensoren 8, 9, 10 der Ortungsvorrichtungen 6, 7 mit Sendern für das Laufzeitsignal, beispielsweise mit Ultraschallsendern ausgestattet. Demnach sind bei den beweglichen Ortungsgegenständen 13, 14, 15 lediglich Empfänger für das Laufzeitsignal erforderlich. Hierdurch ist der Energiebedarf bei diesen beweglichen Gegenständen erheblich reduziert. Durch die separate Datenverbindung über die Kommunikationseinheiten 19 können die Ortungsgegenstände auch mit passiven Empfangssensoren 16 für eine Laufzeitmessung verwendet werden.

Die ortsfest mit den Werkstücken angeordneten Ortungsvorrichtungen 6, 7 können problemlos mit größeren Energiespeichern oder auch mit einem Stromversorgungsnetz verbunden werden. Grundsätzlich kann die separate Datenverbindung auf Seiten der Ortungsvorrichtungen 6, 7 auch verdrahtet mit dem Prozessbegleitrechner oder einer ähnlichen in der Funktion vergleichbaren Einheit erfolgen.

Für die Flexibilität der Prozessbegleitvorrichtung ist es ausreichend, wenn die Ortungsgegenstände 13, 14, 15 frei gegenüber dem Bearbeitungsort der Werkstücke 4, 5 bewegbar sind.

Über die Anzeige 23 und den Signalgeber 24 kann zum einen eine Information über erfolgte Prozessschritte an in den zu überwachenden Prozess involvierte Personen gegeben werden. Auch ein Warnsignal bei fehlerhaftem Prozessschritt kann beispielsweise über diese beiden Einheiten erzeugt werden. Die Prozessführung ist ebenso über diese Einheiten möglich, beispielsweise indem der Ort des nächsten Prozessschrittes dargestellt oder hervorgehoben wird. Auch akustisch kann eine Führung einer im Prozess befindliche Person zum Ort des nächsten Prozessschrittes vorgenommen werden.

Die Bilderfassungseinheit 31 ist so platziert, dass jeder zu überwachende Gegenstand 13, 14, 15 regelmäßig in den Bilderfassungsbereich geführt wird. Die Daten der Bilderfassung werden sodann zur Kalibrierung der Inertialsensoren 29,30 verwendet.

Hierzu ist die Bildauswertungseinheit 33 mit der zentralen Kontrolleinheit 20 verbunden, die wiederum mit den Inertialsensoren 29,30 kommuniziert. Die Datenverarbeitung eines Inertialsensors 29, 30 kann dabei in der Kontrolleinheit oder bereits im Sensor selbst vorgenommen werden. Entsprechend findet dann auch die Kalibrierung entweder in der zentralen Kontrolleinheit 20 oder nach entsprechender Datenübermittlung in dem entsprechenden Inertialsensor 29,30 statt. Die Datenverarbeitung in der Peripherie eines Netzwerkes, d. h. vorliegend in dem oder den Sensoren, wird auch als "Edge Computing" bezeichnet.

Durch die Inertialsensoren sind mit dem zu überwachenden Prozess verbundene Ortungsgegenstände verwendbar, die nicht zwangsläufig ständig mit der jeweiligen Ortungsvorrichtung in Verbindung stehen müssen. Beim Austritt aus dem Wirkungsbereich der Ortungsvorrichtung kann die Bestimmung Position und/oder Lage und/oder Bewegung des Werkzeuges ausgehend von einer vorgegebenen Ausgangssituation anhand der erfassten Sensordaten der Inertialsensoren 29, 30 vorgenommen werden.

Vorzugsweise ist die Ortungsvorrichtung als eine Ultraschall-Ortungsvorrichtung zur Erfassung des/der Ortungsgegenstände mittels Ultraschallwellen ausgebildet und/oder ist eine zusätzliche und/oder separate Datenübertragungseinheit zur Übertragung von prozessrelevanten Ist- und/oder Soll-Daten als Funk-Datenübertragungseinheit zum Übertragen von prozessrelevanten Ist- und/oder Soll-Daten mittels elektromagnetischer Wellen ausgebildet.

Beispielsweise kann durch die unterschiedlichen Laufzeiten einerseits der Ultraschallwellen und andererseits der (viel schnelleren) elektro-magnetischen Funk-Übertragung oder auch der elektrischen Datenübertragung mittels Elektroleitungen bzw. elektrischen Drahtverbindungen und/oder mittels optischer Datenleitung, insb. Glasfaserleitungen, mit einem (elektromagnetischen) Triggersignal bzw. beim Absenden eines Triggersignals durch die Laufzeiterfassung der Ultraschall-Ortung des/der Ortungssensoren der Abstand bzw. die exakte Position des Ortungsgegenstands ermittelt und ggf. weiterverarbeitet werden. Zur Positionsermittlung kann ggf. auch der neue Funkstandard 5G verwendet werden.

Anstelle des Montagebandes 1 kann in einem andere Ausführungsbeispiel auch ein großes Werkstück wie ein Flugzeug bei der Montage vorgesehen sein, wobei mehrere Ultraschallsender- und Empfänger einer Ortungsvorrichtung stationär um das Flugzeug herum verteilt angeordnet sind. Eine oder mehrere Bilderfassungseinheiten sind dann so über den Arbeitsbereich verteilt, dass jedes zu überwachende Werkzeug regelmäßig in einen Bilderfassungsbereich geführt wird. Die Daten der Bilderfassung werden sodann zur Kalibrierung eines oder mehrerer Inertialsensoren an dem oder den Werkzeugen verwendet

Hierzu ist eine nicht näher dargestellte Bildauswertungseinheit mit einer Kontrolleinheit für den oder die Inertialsensoren verbunden, die wiederum mit dem oder den Inertialsensoren kommuniziert. Die Datenverarbeitung eines Inertialsensors kann dabei in der Kontrolleinheit oder bereits im Sensor selbst vorgenommen werden. Entsprechend findet dann auch die Kalibrierung entweder in der Kontrolleinheit oder nach entsprechender Datenübermittlung in dem Sensor statt.

In Kombination mit der dargestellten Vorrichtung zur Ultraschallortung kann die Bestimmung der Position und/oder Lage und/oder Bewegung des Werkzeuges im Abgleich mit diesen Ortungsdaten erfolgen. Hierzu steht eine Kontrolleinheit der Ortungsvorrichtung in Verbindung mit der Kontrolleinheit des oder der Inertialsensoren und/oder der Bildauswerteeinheit zur Verfügung. Die Bildauswerteeinheit, sowie die Kontrolleinheiten der Ortungsvorrichtung und/oder der Kontrolleinheit für den oder die Inertialsensoren können auch zu einer oder zwei Kontrolleinheiten zusammengefasst oder mit einer zentralen Kontrolleinheit verbunden werden.

Die Daten der Inertialsensoren können kombiniert mit den Ortungsdaten verwendet werden, um beispielsweise die Anzahl der Ortungssensoren zu reduzieren oder einen Datenabgleich durchzuführen. Die erfindungsgemäße Kalibrierung der Inertialsensoren ist jedoch nicht auf die Verwendung in Kombination mit einer Ortungsvorrichtung nach den beschriebenen Ausführungsbeispielen beschränkt.

### Bezugszeichenliste:

| | | | |
|---|---|---|---|
| 1 | Montageband | 32 | drahtloser Datenkanal |
| 2 | Umlenkrolle | 33 | Bildauswerteeinheit |
| 3 | Obertrum | | |
| 4 | Automobil | | |
| 5 | Automobil | | |
| 6 | Ortungsvorrichtung | | |
| 7 | Ortungsvorrichtung | | |
| 8 | Ortungssensor | | |
| 9 | Ortungssensor | | |
| 10 | Ortungssensor | | |
| 11 | Kommunikationseinheit | | |
| 12 | elektromagnetische Wellen | | |
| 13 | Schrauber | | |
| 14 | Handschuh | | |
| 15 | Montageteil | | |
| 16 | Ortungssensor | | |
| 17 | Inertialsensor | | |
| 18 | Inertialsensor | | |
| 19 | Kommunikationseinheit | | |
| 20 | zentrale Kontrolleinheit | | |
| 21 | Kommunikationseinheit | | |
| 22 | Steuereinheit | | |
| 23 | Anzeige | | |
| 24 | Signalgeber | | |
| 25 | Ortungssensor | | |
| 26 | Ortungssensor | | |
| 27 | Ortungssensor | | |
| 28 | Kommunikationseinheit | | |
| 29 | Inertialsensor | | |
| 30 | Inertialsensor | | |
| 31 | Bilderfassungseinheit | | |

## Patentansprüche

1. Vorrichtung mit einem Werkzeug (13), wobei die Vorrichtung zur Überwachung der Position und/oder Lage und/oder Bewegung des Werkzeuges dient, wobei am Werkzeug ein Inertialsensor (17,18) wie ein Gyroskopsensor und/oder ein Trägheitssensor befestigt ist, wobei an der Vorrichtung eine Kontrolleinheit (20), wenigstens eine Bilderfassungseinheit (31) und eine Bildauswerteeinheit (33) vorgesehen ist, wobei die Kontrolleinheit zur Bestimmung einer Position und/oder Lage und/oder Bewegung des Werkzeuges ausgehend von einer vorgegebenen Ausgangssituation anhand der erfassten Sensordaten des Inertialsensors ausgebildet ist, wobei die Bilderfassungseinheit zur Kalibrierung des Inertialsensors vorgesehen ist, wobei die Bilderfassungseinheit dazu ausgebildet ist, wenigstens in bestimmten Zeitpunkten oder Zeitintervallen eine oder mehrere Bildaufnahmen des Werkzeuges zu erfassen, wobei die Bildauswertungseinheit zur Bestimmung der Position und/oder Lage und/oder Bewegung des Werkzeuges vorgesehen ist und wobei die Kontrolleinheit für die Kalibrierung der Sensordaten des Inertialsensors zur Verarbeitung der Daten der Bilderfassungseinheit ausgebildet ist, **dadurch gekennzeichnet, dass** an der Vorrichtung eine Ortungsvorrichtung vorgesehen ist, wobei die Ortungsvorrichtung mit einem Ultraschallsender und einem Ultraschallempfänger ausgebildet ist, wobei die Ortungsvorrichtung zur Ortung des Werkzeugs durch Bestimmung der Entfernung zwischen dem Ultraschallsender und dem Ultraschallempfänger über Laufzeitmessungen von Ultraschallsignalen ausgebildet ist, wobei mittels der Ultraschallsignale der Abstand zwischen entsprechenden Sendern und Empfängern bestimmbar ist, wobei der Arbeitsbereich der mittels Laufzeitmessung arbeitenden Ortungsvorrichtung über einen Bildbereich der Bilderfassungseinheit hinausreicht und die Feststellung der Anwesenheit des Werkzeugs im Bildbereich der Bilderfassungseinheit durch die Ortungsvorrichtung zur Ortung des Werkzeugs über Laufzeitmessungen der Ultraschallsignale vorgesehen ist.

2. Vorrichtung nach Anspruch dadurchgekennzeichnet, dass die Kontrolleinheit dafür ausgebildet ist, dass ein Abgleich der Daten des Inertialsensors mit denen der Bildverarbeitung und/oder eine Kalibrierung des Inertialsensors stattfindet, wenn sich das Werkzeug im Bildbereich der Bilderfassungseinheit befindet

3. Vorrichtung nach einem der vorgenannten Ansprüche, **dadurch gekennzeichnet, dass** die Kontrolleinheit dafür ausgebildet ist, dass ein regelmäßiger Abgleich der Daten des Inertialsensors mit denen der Bildverarbeitung und/oder eine Kalibrierung des Inertialsensors stattfindet, wenn sich das Werkzeug im Bildbereich der Bilderfassungseinheit befindet.

4. Vorrichtung nach einem der vorgenannten Ansprüche, **dadurch gekennzeichnet, dass** die Ortungsvorrichtung elektromagnetische Sensoren umfasst.

5. Vorrichtung nach einem der vorgenannten Ansprüche, **dadurch gekennzeichnet, dass** die Vorrichtung eine Datenübertragungseinheit aufweist, wobei die Datenübertragungseinheit neben der Datenübertragung von Daten des Inertialsensors zur Datenübertragung anderer Daten/Informationen/Parameter, insbesondere zur Übertragung eines Triggersignals des Ortungsenders, ausgebildet ist.

6. Vorrichtung nach einem der vorgenannten Ansprüche, **dadurch gekennzeichnet, dass** das Werkzeug ein Handwerkzeug wie ein Schrauber, eine Bohrmaschine oder dergleichen ist.

## Claims

1. Device having a tool (13), wherein the device is used to monitor the position and/or attitude and/or movement of the tool, wherein the tool has an inertial sensor (17, 18) such as a gyroscope sensor and/or an inertia sensor mounted on it, wherein the device has provision for a supervisory unit (20), at least one image capture unit (31) and an image evaluation unit (33), wherein the supervisory unit is designed to determine a position and/or attitude and/or movement of the tool, starting from a specified initial situation, on the basis of the captured sensor data from the inertial sensor, wherein the image capture unit is intended to calibrate the inertial sensor, wherein the image capture unit is designed to capture one or more photographs of the tool at least at specific times or in specific time intervals, wherein the image evaluation unit is intended to determine the position and/or attitude and/or movement of the tool, and wherein the supervisory unit is designed to calibrate the sensor data from the inertial sensor in order to process the data from the image capture unit, **characterized in that** the device has provision for a locating device, wherein the locating device is designed to have an ultrasonic transmitter and an ultrasonic receiver, wherein the locating device is designed to locate the tool by determining the distance between the ultrasonic transmitter and the ultrasonic receiver by way of time-of-flight measurements on ultrasonic signals, wherein the ultrasonic signals can be used to determine the distance between applicable transmitters and receivers, wherein the operating range of the locating device operating by means of time-of-flight measurement extends beyond an image area of the image capture unit and the detection of the presence of the tool in the image area of the image capture unit by the locating device is intended to locate the tool by way of time-of-flight measurements on the ultrasonic signals.

2. Device according to Claim **characterized in that** the supervisory unit is designed so that the data from the inertial sensor are matched against those from the image processing, and/or the inertial sensor is calibrated, when the tool is in the image area of the image capture unit.

3. Device according to either of the preceding claims, **characterized in that** the supervisory unit is designed so that the data from the inertial sensor are routinely matched against those from the image processing, and/or the inertial sensor is calibrated, when the tool is in the image area of the image capture unit.

4. Device according to one of the preceding claims, **characterized in that** the locating device comprises electromagnetic sensors.

5. Device according to one of the preceding claims, **characterized in that** the device has a data transmission unit, wherein the data transmission unit is designed not only for the data transmission of data from the inertial sensor but also for the data transmission of other data/information/parameters, in particular for the transmission of a trigger signal from the locating transmitter.

6. Device according to one of the preceding claims, **characterized in that** the tool is a handheld tool such as a screwdriver, a drill or the like.

## Revendications

1. Dispositif comprenant un outil (13), le dispositif servant à surveiller la position et/ou l'état et/ou le mouvement de l'outil, un capteur inertiel (17, 18) tel qu'un capteur gyroscope et/ou un capteur d'inertie étant fixé à l'outil, une unité de commande (20), au moins une unité de capture d'image (31) et une unité d'évaluation d'image (33) étant prévues sur le dispositif, l'unité de commande étant conçue pour déterminer une position et/ou un état et/ou un mouvement de l'outil à partir d'une situation de départ spécifiée sur la base des données de capteur acquises du capteur inertiel, l'unité de capture d'image étant prévue pour étalonner le capteur inertiel, l'unité de capture d'image étant conçue pour capturer une ou plusieurs images de l'outil au moins à des instants ou intervalles de temps déterminés, l'unité d'évaluation d'image étant prévue pour déterminer la position et/ou l'état et/ou le mouvement de l'outil et l'unité de commande étant conçue pour étalonner les données du capteur inertiel afin de traiter les données de l'unité de capture d'image, **caractérisé en ce qu'**un dispositif de localisation est prévu sur le dispositif, le dispositif de localisation étant conçu avec un émetteur à ultrasons et un récepteur à ultrasons, le dispositif de localisation étant conçu pour localiser l'outil en déterminant la distance entre l'émetteur à ultrasons et le récepteur à ultrasons par des mesures de temps de propagation de signaux ultrasonores, la distance entre des émetteurs et des récepteurs correspondants pouvant être déterminée au moyen des signaux ultrasonores, la zone de travail du dispositif de localisation fonctionnant au moyen d'une mesure de temps de propagation s'étendant au-delà d'une zone d'image de l'unité de capture d'image et la détermination de la présence de l'outil dans la zone d'image de l'unité de capture d'image par le dispositif de localisation étant prévue pour localiser l'outil par des mesures de temps de propagation des signaux ultrasonores.

2. Dispositif selon la revendication **caractérisé en ce que** l'unité de commande est conçue pour effectuer une comparaison des données du capteur inertiel à celles du traitement d'image et/ou un étalonnage du capteur inertiel lorsque l'outil se trouve dans la zone d'image de l'unité de capture d'image.

3. Dispositif selon l'une des revendications précédentes, **caractérisé en ce que** l'unité de commande est conçue pour effectuer une comparaison régulière des données du capteur inertiel à celles du traitement d'image et/ou un étalonnage du capteur inertiel lorsque l'outil se trouve dans la zone d'image de l'unité de capture d'image.

4. Dispositif selon l'une des revendications précédentes, **caractérisé en ce que** le dispositif de localisation comprend des capteurs électromagnétiques.

5. Dispositif selon l'une des revendications précédentes, **caractérisé en ce que** le dispositif comporte une unité de transmission de données, l'unité de transmission de données étant conçue, en plus de la transmission de données du capteur inertiel, pour la transmission d'autres données/informations/paramètres, notamment pour la transmission d'un signal de déclenchement de l'émetteur de localisation.

6. Dispositif selon l'une des revendications précédentes, **caractérisé en ce que** l'outil est un outil à main tel qu'un tournevis, une perceuse ou autre.
